# EUROPÄISCHE PATENTSCHRIFT

(11) **EP 0 864 380 B1**
(45) Veröffentlichungstag und Bekanntmachung des Hinweises auf die Patenterteilung: **19.02.2003**
(21) Anmeldenummer: 98104362.3
(22) Anmeldetag: 11.03.1998
(51) Int. Cl.: B21B 35/14

(54) **Verbindung zwischen dem Spindelkopf einer Zahn- oder Kreuzgelenkspindel und einem Walzenzapfen**
Connection between the head of an articulated spindle having a toothed joint or a universal joint and a roll neck
Raccord entre la tête d'une broche articulée à joint denté ou joint de cardan et un tourillon de cylindre

(30) Priorität: 14.03.1997 DE 19710552
(43) Veröffentlichungstag der Anmeldung: 16.09.1998
(73) Patentinhaber: SMS Demag AG, 40237 Düsseldorf (DE)
(72) Erfinder: Seidl, Karl-Heinz, 57271 Hilchenbach (DE); Marburger, Hans-Joachim, 57339 Erndtebrück (DE)
(74) Vertreter: Valentin, Ekkehard, Dipl.-Ing.

(56) Entgegenhaltungen:
- PATENT ABSTRACTS OF JAPAN vol. 095, no. 004, 31. Mai 1995 -& JP 07 016623 A (KAWASAKI STEEL CORP), 20. Januar 1995

## Beschreibung

Die Erfindung betrifft eine Verbindung zwischen dem Spindelkopf einer Zahn- oder Kreuzgelenkspindel und dem Walzenzapfen einer Walze, wobei zwischen Passflächen am Spindelkopf und Walzenzapfen unter primärer Ausbildung eines Formschlusses Verschleißplatten eingelegt sind.

Beim Stand der Technik ist es üblich, den Spindelkopf auf den Walzenzapfen formschlüssig mit Spiel aufzusetzen. In der Praxis hat sich diese Art der Verbindung zwischen Spindelkopf und Walzenzapfen insbesondere bei Dressiergerüsten als nachteilig erwiesen. Das Passungsspiel verursacht bei der Übertragung hoher und ungleichmäßiger Drehmomente Relativbewegungen zwischen Spindelkopf und Walzenzapfen, was zu einem rapiden Verschleiß der aus Bronzematerial hergestellten Verschleißplatten führt. Darüber hinaus ergeben sich durch dieses Spiel Ungleichförmigkeiten des übertragenen Drehmomentes, die letztendlich zu Getriebeschäden des Antriebsystems und zu Fehlern in der Oberfläche des Walzgutes führen können.

Um den Verschleiß der Verschleißplatten und das Passungsspiel der Verbindung zwischen Spindelkopf und Walzenzapfen zu mindern, wird in der JP-A-7-16623 eine Verbindung zwischen dem Spindelkopf einer Spindel und dem Walzenzapfen einer Arbeitswalze beschrieben, bei der zwischen drehmomentübertragenden Passflächen am Spindelkopf und am Walzenzapfen unter Ausbildung eines Formschlusses Verschleißplatten eingelegt sind. Zur Herstellung einer Klemmverbindung zum Walzenzapfen hin werden diese Verschleißplatten mittels eines Hydraulikzylinders über Federkörper gegen den Walzenzapfen gedrückt.

Der Erfindung liegt die Aufgabe zugrunde, eine Verbindung der im Oberbegriff von Anspruch 1 genannten Art weiter zu entwickeln und zu verbessern, um die vorgenannten Schwierigkeiten und Nachteile zu vermeiden und insbesondere den Verschleiß der Verschleißplatten signifikant zu verringern, ungleichförmige Drehmomente zu vermeiden und damit insgesamt die Betriebsbedingungen bei der Drehmomentübertragung zu optimieren.

Die Lösung der Aufgabe gelingt mit der Erfindung bei einer Verbindung der eingangs genannten Art dadurch, dass dem Spindelkopf eine Klemmvorrichtung zugeordnet ist, durch welche unter Druckeinwirkung auf die Verschleißplatten und Klemmung des Spindelkopfes auf dem Walzenzapfen die formschlüssige Verbindung zu einer spielfreien Verbindung ausgebildet ist.

Mit großem Vorteil wird durch überlagerung der formschlüssigen Verbindung mit einer Klemmvorrichtung das nachteilige Kupplungsspiel eliminiert und ein von ungleichförmigen Drehmomentspitzen freier Lauf der angetriebenen Walze ermöglicht. Damit werden insgesamt die Betriebsbedingungen bei der Drehmomentübertragung optimiert und sowohl die Verschleißund Störanfälligkeit der Antriebselemente reduziert, als auch die Oberflächengüte des Walzproduktes verbessert.

Eine Ausgestaltung der Erfindung sieht vor, dass die Klemmkraft eine spielfreie Fixierung des Spindelkopfes auf dem Walzenzapfen ergibt und damit zwischen diesen einen Kraftschluss ausbildet.

Damit werden die vorgenannten Nachteile und Störungsfaktoren vom Stand der Technik vollständig überwunden.

Weitere Ausgestaltungen der erfindungsgemäßen Verbindung sind entsprechend den Unteransprüchen vorgesehen. Einzelheiten, Merkmale und Vorteile der Erfindung ergeben sich aus der nachstehenden Erläuterung eines in den Zeichnungen schematisch dargestellten Ausführungsbeispieles.

Es zeigen:
- Fig. 1: eine Verbindung zwischen dem Spindelkopf einer Kreuzgelenkspindel und dem Walzenzapfen einer Walze, teilweise in Ansicht und teilweise im Schnitt,
- Fig. 2: eine Klemmvorrichtung in vergrößertem Maßstab, im Schnitt.

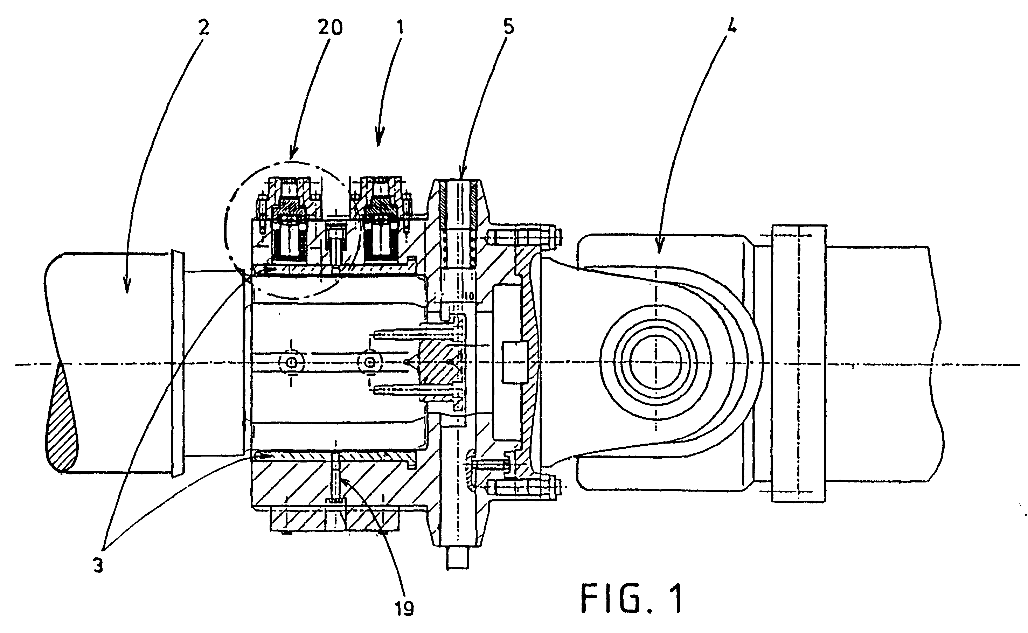

Figur 1 zeigt eine Verbindung zwischen dem Spindelkopf (1) einer Kreuzgelenkspindel (4) und dem Walzenzapfen (2) einer Walze, wobei zwischen drehmomentübertragenden Passflächen am Spindelkopf (1) und Walzenzapfen (2) unter Ausbildung eines Formschlusses Verschleißplatten (3) eingelegt sind. Dem Spindelkopf (1) ist eine Klemmvorrichtung (20) zugeordnet, durch welche unter Druckeinwirkung auf die Verschleißplatten (3) und Klemmung des Spindelkopfes (1) auf dem Walzenzapfen (2) die formschlüssige Verbindung zu einer spielfreien Verbindung ausgebildet ist.

Die Verbindung nach der Erfindung ist dadurch besonders vorteilhaft, dass die Klemmkraft der Klemmvorrichtung (20) eine spielfreie Fixierung des Spindelkopfes (1) auf dem Walzenzapfen (2) ergibt und damit zwischen diesen einen Kraftschluss ausbildet.

Die Verbindung besitzt weiterhin wenigstens eine Arretierungsschraube (19) und einen mit dem Walzenzapfen (2) zusammenwirkenden Sicherungsbolzen (5).

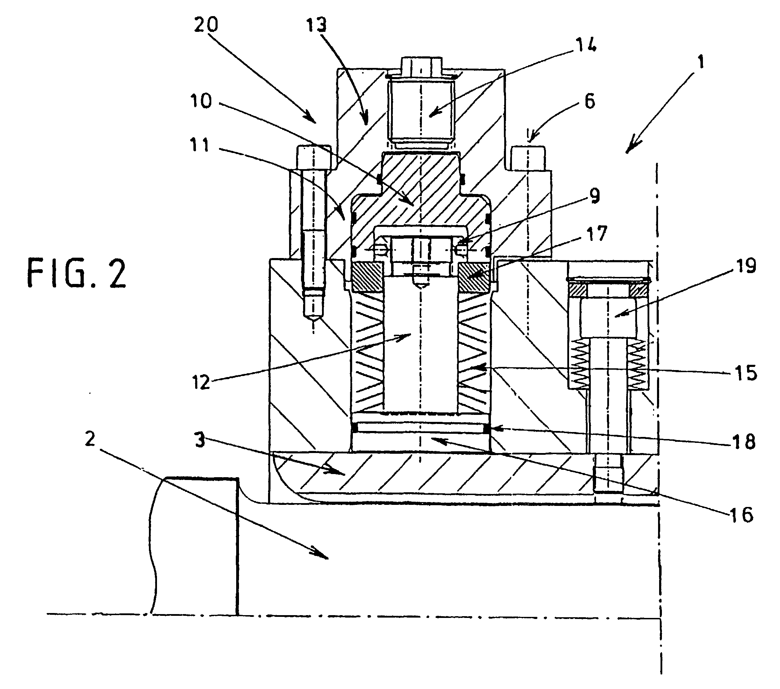

Die in Fig. 1 durch einen strichpunktierten Kreis gekennzeichnete Klemmvorrichtung (20) ist in der Figur 2 in vergrößertem Maßstab und in einer Teilansicht gezeigt. Daraus ist erkennbar, dass die Klemmverbindung (20) wenigstens einen gegen die Verschleißplatten (3) kraftschlüssig abstützbaren, vom Kolben (10) eines Hydraulik-Spannzylinders (11) mit Druck beaufschlagbaren Bolzen (12) aufweist und der Kolben (10) mit einer im Gehäuse (13) des Spannzylinders (11) eingelassenen Feststellschraube (14) beaufschlagbar und feststellbar ist.

Mit der erfindungsgemäßen Ausbildung der Klemmvorrichtung (20) wird der Spindelkopf (1) auf dem Walzenzapfen (2) mit hoher Kraft verklemmt, und zwar zunächst mit dem hydraulischen Mittel durch Druckbeaufschlagung des Kolbens (10) im Hydraulik-Spannzylinder (11). Dabei ist es üblich, Arbeitsdrücke zwischen 500 und 750 bar anzuwenden. Dabei werden je Spannzylinder bei einer darstellungsgemäßen Auslegung der hydraulischen Kolben/Zylinder-Einheit Pressdrücke in der Größenordnung von 30 Tonnen erreicht. Bei einer Anordnung gemäß Fig. 1 der Klemmvorrichtung (20) am Spindelkopf (1) ergeben sich beispielsweise Klemmkräfte von 2 x 30 = 60 Tonnen. Nachdem der Druckbolzen (12) hydraulisch beaufschlagt wurde, wird er durch Aufsetzen und Niederschrauben der Feststellschraube (14) endgültig fixiert.

Die Ausbildung der Klemmvorrichtung nach Fig. 2 zeigt, dass der Druckbolzen (12) und der Kolben (10) des Spannzylinders (11) von einem Tellerfederpaket (15) mit Rückstellkraft beaufschlagbar sind. Mit Vorteil ist bei dieser Ausbildung der Druckbolzen (12) an dem der Verschleißplatte (3) zugewandten Ende mit einer Druckverteilungsplatte (16) unterlegt. Weiterhin ist der Druckbolzen (12) kopfseitig von einer massiven Scheibe (17) umgeben und diese von einer Spannmutter (9) gegen die Rückstellkraft des zwischen der Scheibe (17) und der Druckverteilungsplatte (16) eingespannten Tellerfederpaketes (15) gehalten. Die Druckverteilungsplatte (16) weist eine Nut mit einem darin eingelegten O-Ring (18) auf. Die Spannmutter (9) ist auf einem Gewindefortsatz am Kopf des Druckbolzens (12) aufgeschraubt. Daraus ergibt sich eine sehr kompakte Hydraulikeinheit der Klemmvorrichtung (20). Weiterhin weist der Spindelkopf (1) eine mit der Verschleißplatte (3) zusammenwirkende Arretierungsschraube (19) und einen mit dem Walzenzapfen (2) zusammenwirkenden Sicherungsbolzen (5, Fig. 1) auf. Und schließlich ist eine charakteristische Ausbildung der Verbindung mit der Klemmvorrichtung (20) dadurch gekennzeichnet, dass das Gehäuse (13) des Hydraulik-Spannzylinders (11) mit dem Spindelkopf (1) durch Schrauben (6) verbunden ist. Diese Anordnung ergibt die vorteilhafte Möglichkeit, einen vorhandenen Spindelkopf (1) im Bedarfsfall nachträglich mit der Klemmvorrichtung (20) auszurüsten.

Die Erfindung ist unkompliziert und ermöglicht in vorteilhafter Weise sowie gegebenenfalls unter Nachrüstung vorhandener Anlagen eine spielfreie Ausbildung einer Verbindung zwischen dem Spindelkopf (1), einer Zahn- oder Kreuzgelenkspindel (4) und dem Walzenzapfen (2) einer Walze unter Vermeidung der beim Stand der Technik festgestellten Schwachpunkte. Insofern löst die Erfindung in optimaler Weise die eingangs gestellte Aufgabe.

## Patentansprüche

1. Verbindung zwischen dem Spindelkopf (1) einer Zahn- oder Kreuzgelenkspindel (4) und dem Walzenzapfen (2) einer Walze, wobei zwischen deren drehmomentübertragenden Passflächen unter Ausbildung eines Formschlusses Verschleißplatten (3) eingelegt sind, und dem Spindelkopf (1) eine Klemmvorrichtung (20) zugeordnet ist, welche durch Klemmkraft unter Druckeinwirkung auf die Verschleißplatten (3) eine Fixierung des Spindelkopfes (1) auf dem Walzenzapfen (2) und damit zwischen diesen einen spielfreien Kraftschluss ausbildet, wobei die Klemmverbindung (20) wenigstens einen gegen die Verschleißplatten (3) kraftschlüssig abstützbaren Kolben (10) eines Hydraulik-Spannzylinders (11) aufweist, der von einem Tellerfederpaket (15) mit Rückstellkraft beaufschlagbar ist,
**dadurch gekennzeichnet, dass**
a) die Klemmverbindung (20) wenigstens einen gegen die Verschleißplatten (3) kraftschlüssig abstützbaren, vom Kolben (10) mit Druck beaufschlagbaren und vom Tellerfederpaket (15) mit Rückstellkraft beaufschlagbaren Druckbolzen (12) aufweist,
b) der Kolben (10) mit einer im Gehäuse (13) des Spannzylinders (11) eingelassenen Feststellschraube (14) feststellbar ist,
c) der Druckbolzen (12) an dem der Verschleißplatte (3) zugewandten Ende mit einer Druckverteilungspatte (16) unterlegt und kopfseitig von einer massiven Scheibe (17) umgeben und diese von einer Spannmuttter (9) gegen die Rückstellkraft des zwischen der Scheibe (17) und der Druckverteilungsplatte (16) eingespannten Tellerfederpaketes (15) gehalten ist.

2. Verbindung nach Anspruch 1, **dadurch gekennzeichnet, dass** die Druckverteilungsplatte (16) eine Nut mit einem darin eingelegten O-Ring (18) aufweist.

3. Verbindung nach Anspruch 1 oder 2, **dadurch gekennzeichnet, dass** die Spannmutter (9) auf einem Gewindefortsatz am Kopf des Druckbolzens (12) aufgeschraubt ist.

4. Verbindung nach einem oder mehreren der Ansprüche 1 bis 3, **dadurch gekennzeichnet, dass** der Spindelkopf (1) eine mit der Verschleißplatte (3) zusammenwirkende Arretierungsschraube (19) und einen mit dem Walzenzapfen (2) zusammenwirkenden Sicherungsbolzen (5) aufweist.

5. Verbindung nach einem oder mehreren der Ansprüche 1 bis 4, **dadurch gekennzeichnet, dass** das Gehäuse (13) des Hydraulik-Spannzylinders (11) mit dem Spindelkopf (1) durch Schrauben (6) verbunden ist.

## Claims

1. Connection between the spindle head (1) of a toothed or universal joint spindle (4) and the roll pin (2) of a roll, wherein wear plates (3) are inserted between the torque-transmitting locating surfaces thereof with formation of a mechanically positive coupling, and the spindle head (1) is associated with a clamping device (20) which forms, by clamping force under pressure action on the wear plates (3), a fixing of the spindle head (1) to the roll pin (2) and thus a play-free, force-locking coupling between these, wherein the clamping connection (20) comprises at least one piston (10), which can be supported in force-locking manner against the wear plates (3), of a hydraulic clamping cylinder (11) which is loadable with restoring force by a plate spring packet (15), **characterised in that**
a) the clamping connection (20) comprises at least one pressure pin (12) which can be supported in force-locking manner against the wear plates (3) and which can be loaded with pressure by the piston (10) and with restoring force by the plate spring packet (15),
b) the piston (10) is fixable by a fixing screw (14) let into the housing (13) of the clamping cylinder (11) and
c) the pressure pin (12) has a pressure distributing plate (16) disposed thereunder at the end facing the wear plate (3) and is surrounded at the head end by a solid disc (17), which is held by a clamping nut (9) against the restoring force of the plate spring packet (15) clamped in place between the disc (17) and the pressure distributing plate (16).

2. Connection according to claim 1, **characterised in that** the pressure distributing plate (16) has a groove with an O-ring (18) inserted therein.

3. Connection according to claim 1 or 2, **characterised in that** the clamping nut (9) is screwed onto a threaded extension at the head of the pressure pin (12).

4. Connection according to one or more of claims 1 to 3, **characterised in that** the spindle head (1) has a locking screw (19) co-operating with the wear plate (3) and a securing pin (5) co-operating with the roll pin (2).

5. Connection according to one or more of claims 1 to 4, **characterised in that** the housing (13) of the hydraulic clamping cylinder (11) is connected with the spindle head (1) by screws (6).

## Revendications

1. Raccord entre la tête (1) d'une broche articulée dentée ou à joint de cardan (4) et le tenon (2) d'un cylindre, des plaques d'usure (3) étant placées entre leurs surfaces d'appui transmettant le couple de rotation en formant une liaison mécanique, et un dispositif de serrage (20) étant associé à la tête (1) de la broche, qui réalise par force de serrage avec un effet de pression sur les plaques d'usure (3) une fixation de la tête (1) de broche sur le tenon (2) du cylindre et donc un raccord à friction sans jeu entre ceux-ci, le dispositif de serrage (20) présentant au moins un piston (10) pouvant s'appuyer mécaniquement contre les plaques d'usure (3) d'un cylindre (11) de serrage hydraulique, qui peut être sollicité par un ensemble de ressorts à disque (15) avec force de rappel, **caractérisé**
(a) en ce que le dispositif de serrage (20) présente au moins un boulon de pression (12) s'appuyant mécaniquement contre les plaques d'usure (3) pouvant être mis sous pression par le piston (10) et pouvant être sollicité par le jeu de ressorts à disque (15) avec force de rappel,
(b) en ce que le piston (10) peut être bloqué avec une vis de blocage (14) introduite dans le bâti (13) du cylindre de serrage (11)
(c) en ce que le boulon de pression (12) est calé en l'extrémité face à la plaque d'usure (13) avec une plaque de répartition de pression (16) et est entouré du côté de la tête par un disque massif (17) et celui-ci est maintenu par un écrou de serrage (9) contre la force de rappel du jeu de ressorts à disque (15) serré entre le disque (17) et la plaque de répartition de pression (16).

2. Raccord selon la revendication 1, **caractérisé en ce que** la plaque de répartition de la pression (16) présente une rainure avec un joint en O (18) placé dans celle-ci.

3. Raccord selon la revendication 1 ou 2, **caractérisé en ce que** l'écrou de serrage (9) est vissé sur un prolongement fileté sur la tête du boulon de serrage (12).

4. Raccord selon l'une ou plusieurs des revendications 1 à 3, **caractérisé en ce que** la tête (1) de la broche présente une vis de blocage (19) interagissant avec la plaque d'usure (3) et un boulon de sécurité (5) interagissant avec le tenon (2) du cylindre.

5. Raccord selon l'une quelconque des revendications 1 à 4, **caractérisé en ce que** le bâti (13) du cylindre (11) de serrage hydraulique est relié à la tête (1) de broche par des vis (6).
